# EUROPÄISCHE PATENTSCHRIFT

(11) **EP 2 420 860 B1**
(45) Veröffentlichungstag und Bekanntmachung des Hinweises auf die Patenterteilung: **03.04.2013**
(21) Anmeldenummer: 11176373.6
(22) Anmeldetag: 03.08.2011
(51) Int. Cl.: G01S 7/527, G01S 15/58, G01S 15/62, G01S 15/93, G01S 7/288

(54) **Verfahren zur Auswertung von Signalen einer Sensoreinheit und Vorrichtung zur Umfelderfassung in einem Fahrzeug**
Method for evaluating signals of a sensor unit and device for environmental detection in a vehicle
Procédé d'évaluation de signaux d'une unité de détection et dispositif de détection d'environnement dans un véhicule

(30) Priorität: 17.08.2010 DE 102010034492
(43) Veröffentlichungstag der Anmeldung: 22.02.2012
(73) Patentinhaber: Valeo Schalter und Sensoren GmbH, 74321 Bietigheim-Bissingen (DE)
(72) Erfinder: Gotzig, Heinrich, 74357 Bönnigheim (DE); Hallek, Michael, 71717 Beilstein (DE); Heimberger, Markus, 74354 Besigheim (DE); Rostocki, Paul-David, 74177 Bad Friedrichshall (DE)

(56) Entgegenhaltungen:
- DE-A1- 4 224 209
- US-A- 4 660 565

## Beschreibung

Die Erfindung betrifft ein Verfahren zur Auswertung von Signalen einer Sensoreinheit der im Oberbegriff des Anspruchs 1 genannten Art, sowie eine zugehörige Vorrichtung zur Umfelderfassung in einem Fahrzeug und ein Computerprogramm und ein Computerprogrammprodukt zur Durchführung des Verfahrens.

Bekannte Vorrichtungen zur Umfelderfassung in einem Fahrzeug, welche zur Abstandsmessung die Ultraschalltechnologie verwenden, umfassen in der Regel eine Sensoreinheit, welche mindestens einen Ultraschallsensor aufweist, und eine Auswerte- und Steuereinheit. Hierbei sendet die Sensoreinheit Ultraschallsignale in einen zu überwachenden Bereich aus und empfängt in Reaktion auf die ausgesendeten Ultraschallsignale Echosignale, welche die Auswerte- und Steuereinheit zur Erfassung von Objekten und/oder Objektbewegungen in dem zu überwachenden Bereich auswertet. Die meisten bekanolen Vorrichtungen zur Umfelderfassung sind so ausgelegt, dass durch Auswerten der empfangenen Echosignale lediglich digitale Informationen über radiale Abstände von Objekten zum Fahrzeug erzeugt werden. Solche Vorrichtungen zur Fahrzeugumfelderfassung können beispielsweise Teil einer Einparkhilfeapplikation für ein Kraftfahrzeug sein.

In der Patentanmeldung EP 1 480 056 A1 werden beispielsweise ein Verfahren und eine Vorrichtung zur Bercichsüberwachuny für Kraftfahrzeug beschrieben. Gemäß dem beschriebenen Verfahren werden mittels wenigstens einem Ultraschallsenders Ultraschallsignale in einen zu überwachenden Bereich gesendet, mittels wenigstens eines Ultraschallempfängers reflektierte Ultraschallsignale empfangen und zur Erfassung von Objektbewegungen in dem zu überwachenden Bereich die empfangenen reflektierten tierten Ultraschallsignale mittels einer elektronischen Auswerteeinheit entsprechend ausgewertet. Hierbei werden die empfangenen reflektierten Ultraschallsignale mittels der elektronischen Auswerteeinheit einer Quadraturdemodulation unterworfen, wobei ausgehend von den empfangenen reflektierten Ultraschallsignalen durch eine entsprechend zeitversetzte Unterabtastung eine Realteilkomponente und eine dazu orthogonale Imaginärteilkomponente erzeugt, anhand dieser beiden orthogonalen Komponenten die jeweilige Phase der empfangenen reflektierten Ultraschallsignale ermittelt und zur Erfassung von Objektbewegungen in dem zu überwachenden Bereich Änderungen dieser Phase herangezogen werden. Allerdings hängt die Phasengenauigkeit ganz stark von der Genauigkeit der Resonanzfrequenz der Ultraschallsensoren ab.

Aus der DE 42 24 209 A ist eine Ultraschall-Meßvorrichtung zur Analyse einer Probe bekannt, bei der die empfangenen Echosignale einer Quadraturphasendetektion unterworfen werden. Bei der Quadraturphasendetektion werden aus einem kontinuierlichen Wellensignal vier jeweils um 45 Grad phasenverschobene Referenzsignale erzeugt, die jeweils einzeln mit den empfangenen Echosignalen gemischt werden.

Aus der US 4 660 565 A ist ein Ultraschall-Diagnosegerät mit Quadraturphasendetektion bekannt, bei der aus einem digitalen Basissignal zwei jeweils um 90 Grad phasenverschobene Referenzsignale erzeugt und jeweils einzeln mit den empfangenen Echosignalen gemischt werden.

Aufgabe der Erfindung ist es, ein Verfahren zur Auswertung von Signalen eines Sensoreinheit der im Oberbegriff des Anspruchs 1 genannten Art und eine korrespondierende Vorrichtung zur Umfelderfassung in einem Fahrzeug der im Oberbegriff des Anspruchs 10 genannten Art dahingehend weiterzuentwickeln, dass eine weitergehende Signalauswertung durch eine Quadraturphasendetektion vereinfacht und eine einfache Erzeugung von erforderlichen Referenzsignalen für die Quadraturphasendetektion ermöglicht wird, sowie ein Datenverarbeitungsprogramm und ein Computerprogrammprodukt zur Durchführung des Verfahrens zur Auswertung von Signalen eines Sensoreinheit anzugeben.

Diese Aufgabe wird erfindungsgemäß durch ein Verfahren zur Auswertung von Signalen einer Sensoreinheit mit den Merkmalen des Anspruchs 1 sowie durch eine Vorrichtung zur Umfelderfassung in einem Fahrzeug mit den Merkmalen des Anspruchs 10 sowie durch ein Datenverarbeitungsprogramm mit den Merkmalen des Anspruchs 14 und durch ein Computerprogrammprodukt mit den Merkmalen des Anspruchs 15 gelöst. Weitere die Ausführungsformen der Erfindung in vorteilhafter Weise ausgestaltende Merkmale enthalten die Unteransprüche.

Der mit der Erfindung erzielte Vorteil besteht darin, dass die Sensorsignale mit digital erzengten Referenzsignalen gemischt werden, so dass keine Phasenfehler entstehen. Durch die Anwendung von digitalen Logikverknüpfungen lassen sich die vier jeweils um 90° phasenverschobene Referenzsignale relativ einfach erzeugen. Zudem ergibt sich durch die Mischung der Sensorsignale mit den Referenzsignalen jeweils ein Frequenzversatz. Dies hat den Vorteil, dass die Abtastung einfacher wird, da durch die tiefere Frequenz die Anforderung an einen Analog-Digital-Mandler reduziert sind. Fernen reduziert sich die Datenmenge, da mit einer niedrigere Abtastrate gearbeitet werden kann. Da Ausführungsformen der vorliegenden Erfindung keine festgelegte Trägerfrequenz verwenden, sind Ausführungsformen der Erfindung sehr flexibel einsetzbar und ein sogenanntes 1/f. Rauschen kann vermieden werden. Die vierfache Mischung ermoglicht in vorteilhafter Weise die Entfernung eines eventuell vorhandenen Gleichspannungsoffsets und eine optimale Datenanalyse.

Der Grundgedanke der Erfindung basiert darauf, dass zur Quadraturphasendetektion erforderliche Referenzsignale unter Verwendung von digitalen Logikverknüpfungen aus einem digitalen Basissignal erzeugt werden. Durch die Quadraturphasendetektion wird die Auswerteelektronik der Ultraschallsensoren so verändern, dass eine weitergehende Signalauswertung stattfinden kann. Zur einfachen Implementierung der benötigten Referenzsignale werden digitale Logikverknüpfungen vorgeschlagen, welche beispielsweise in einem ASIC recht einfach umgesetzt werden können.

Ausführungsformen eines erfindungsgemäßen Verfahrens zur Auswertung von Signalen einer Sensoreinheit mit mindestens einem Ultraschallsensor senden Ultraschallsignale in einen zu überwachenden Bereich aus und empfangen in Reaktion auf die ausgesendeten Ultraschallsignale Echosignale, welche zur Erfassung von Objekten und/oder Objektbewegungen in dem zu überwachenden Bereich ausgewertet werden, wobei die empfangenen Echosignale zur Auswertung einer Quadraturphasendetektion unterworfen werden. Erfindungsgemäß werden zur Quadraturphusendetektion erforderliche Referenzsignale unter Verwendung von digitalen Logikverknüpfungen aus einem digitalen Basissignal erzeugt, wobei vier jeweils um 90° phasenverschobene Referenzsignale erzeugt und jeweils einzeln mit den empfangenen Echosignalen gemischt werden.

Ausführungsformen der erfindungsgemäßen Vorrichtung zur Umfelderfassung in einem Fahrzeug umfassen eine Sensoreinheit, welche Mindestens einen Ultraschallsensor aufweist, und eine Auswerte- und Steuereinheit, wobei die Sensoreinheit Ultraschallsignale in einen zu überwachenden Bereich aussendet und in Reaktion auf die ausgesendeten Ultraschallsignale Echosignale empfängt, welche die Auswerte- und Steuereinheit zur Erfassung von Objekten und/oder Objektbewegungen in dem zu überwachenden Bereich auswertet wobei die Auswerte- und Steuereinheit die empfangenen Echosignale zur Auswertung einer Quadraturphasendetektion unterwirft. Erfindungsgemäß ist eine Referenzsignalerzeugungseinheit, welche zur Quadraturphasendetektion erforderliche Referenzsignale unter Verwendung von digitalen Logikverknüpfungen aus einem digitalen Basissignal erzeugt, und ein Quadraturphasendetektor vorgesehen, welcher vier jeweils um 90° phasenverschobene Referenzsignale einzeln mit den empfangenen Echosignalen mischt.

Ausführungsformen der vorliegenden Erfindung bzw. einzelne beschriebenen Komponenten können als Schaltung, Vorrichtung, Verfahren, Datenverarbeitungsprogramin mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden, Zudem kann die vorliegende Erfindung als Computerprogrammprodukt auf einem computernutzbaren Speichermedium mit computerlesbarem Programmcode ausgeführt werden, wobei verschiedene computerlesbare Speichermedien wie Festplatten, CD-ROMs, optische oder magnetisch Speicherelemente usw. benutzt werden können.

In vorteilhafter Ausgestaltung des erfindungsgemäßen Verfahrens kann ein erstes Referenzsignal durch eine Frequenzteilung des digitalen Basissignals erzeugt werden. Ein zweites Referenzsignal kann durch eine Exklusiv-ODER-Verknüpfung des ersten Referenzsignals mit dem digitalen Basissignal erzeugt werden. Ein drittes Referenzsignal kann durch eine Invertierung des ersten Referenzsignals erzeugt werden. Ein viertes Referenzsignal kann durch eine Invertierung des zweiten Referenzsignals erzeugt werden. Diese logischen Verknüpfungen können in vorteilhafter Meise sehr einfach in einem ASIC realisiert werden, um die entsprechenden phasenverschobenen Referenzsignale zu erzeugen. Ausgehend von dem digitalen Basissiqnal mit einer Frequenz von beispielsweise 80kHz können die weiteren Referenzsignale durch die oben angegebenen logischen Verknüpfungen jeweils mit einer halbierten Frequenz von 40kHz erzeugt werden.

In weiterer vorteilhafter Ausgestaltung des erfindungsgemäßen Verfahrens können jeweils zwei aus den Referenzsignale und den empfangenen Echosignale erzeugte Mischsignals, welche 180° phasenverschoben sind, addiert werden, um einen Imaginärteil und einen Realteil der empfangenen Echosignale zu ermitteln. So kann dei Realteil der empfangenen Echosignale vorzugsweise durch Addition eines ersten Mischsignals, welches durch Mischen der empfangenen Echosignale mit dem ersten Referenzsignal erzeugt wird, und eines dritten Mischsignals ermittelt werden, welches durch Mischen der empfangenen Echosignale mit dem dritten Referenzsignal erzeugt wird. Der Imaginärteil der empfangenen Echosignal kann vorzugsweise durch Addition eines zweiten Mischsignals, welches durch Mischen der empfangenen Echosignale mit dem zweiten Referenzsignal erzeugt wird, und eines vierten Mischsignals ermittelt werden, welches durch Mischen der empfangenen Echosignale mit dem vierten Referenzsignal erzeugt wird. In vorteilhafter Weise können durch die jeweilige Addition eventuell vorhandene Offsets in den empfangenen Echosignalen entfernt werden. Des Weiteren liegt nach der Ermittlung des Realteils und des Imaginärteils des Ultraschallsensorsignals die vollständige Information vor, um in vorteilhafter Weise eine komplette Analyse des empfangenen Echosignal im Frequenzbereich durchführen zu können. Daher werden der Realteil und der Imaginärteil der empfangenen Echosignale zur weiteren Auswertung in vorteilhafter Weise einer Fast-Fourier-Transformation unterzogen. Die Fast-Fourier-Transformation mit dem komplexen empfangenen Echosignale erlaubt eine eindeutige Bestimmung der Dopplerfrequenz. Im Gegensatz zu einer Durchführung der Fast-Fourier-Transformation nur mit einem durch einen Analog-Digital-Wandler umgewandelten Signal, bei welcher nur der Betrag aber nicht die Richtung bestimmt werden kann, kann durch Ausführungsformen der vorliegenden Erfindung sowohl Betrag als auch Richtung bestimmt werden. Zudem ergibt sich durch Ausführungsformen der vorliegenden Erfindung eine Verbesserung des Signal-Rausch-Verhältnisses um 3 dB gegenüber einer einfachen Analog-Digital-Wandlung.

Die Fast-Fourier-Transformation des durch die Quadraturdetektion erhaltenen komplexen empfangenen Echosignals liefert ein komplexe Spektrum. Das komplexe Spektrum bietet erweiterte Möglichkeiten, um eine eindeutige Trennung des eigentlichen Echossignals von unerwünschten Störungen der Umgebung durchzuführen. Dies ist dadurch möglich, dass die Trägerfrequenz, die Signaldauer, die zeitliche Form des vom Ultraschallsensor abgestrahlten Signals bekannte und beeinflussbare Größen sind. So kann zwischen Nutz- und Störsignal besser unterschieden werden, das Störsignal wird eliminiert und das nach der Rücktransformation (Frequenz- in den Zeitraum) erhaltene Signal ist störungsbereinigt,

In vorteilhafter Ausgestaltung der erfindungsgemäßen Vorrichtung erzeugt die Referenzsignalerzeugungseinheit ein erstes Referenzsignal aus dem digitalen Basissignal unter Verwendung eines T-Flip-Flops und/oder ein zweites Referenzsignal durch eine Exklusiv-ODER-Verknüpfung des ersten Referenzsignals mit dem digitalen Basissignal und/oder ein drittes Referenzsignal durch eine Invertierung des ersten Referenzsignals und/oder ein viertes Referenzsignal durch eine invertierung des zweiten Referenzsignals.

In weiterer vorteilhafter Ausgestaltung der erfindungsgemäßen Vorrichtung addiert der Quadraturphasendetektor jeweils zwei aus den Referenzsignalen und den empfangenen Echosignalen erzeugte Mischsignals, welche 180° phasenverschoben sind, um einen Imaginärteil und einen Realteil der empfangenen Echosignale zu ermitteln. So ermittelt der Quadraturphasendetektor de-Realteil der empfangenen Echosignale vorzugsweise durch Addition eines ersten Mischsignals, welches durch Mischen der empfangenen Echosignale mit dem ersten Referenzsignal erzeugbar ist, und eines dritten Mischsignals, welches durch Mischen der empfangenen Echosignal mit dem dritten Referenzsignal erzeugbar ist, und/oder den Imaginärteil der empfangenen Echosignale vorzugsweise durch Addition eines zweiten Mischsignals, welches durch Mischen der empfangenen Echosignale mit dem zweiten Referenzsignal erzeugbar ist, und eines vierten Mischsignals, welches durch Mischen der empfangenen Echosignale mit dem vierten Referenzsignal erzeugbar ist.

Nachfolgend wird ein Ausführungsbeispiel der Erfindung anhand einer zeichnerischen Darstellung näher erläutert.

In der Darstellung zeigt:
- Fig. 1: ein schematisches Blockdiagramm eines Ausführungsbei-spiels einer erfindungsgemäßen Vorrichtung zur Umfel-derfassung in einem Fahrzeug.
- Fig. 2: ein detaillierteres Blockdiagramm von Ausführungsbei-spielen einer Referenzsignalerzeugungseinheit und eines Quadraturphasendetektors für die erfindungsgemäße Vor-richtung zur Umfelderfassung in einem Fahrzeug aus Fig. 1.
- Fig. 3: Kennliniendiagramme eines digitalen Basissignals und von daraus erzeugen Referenzsignalen für die erfin-dungsgemäße Vorrichtung zur Umfelderfassung in einem Fahrzeug aus Fig. 1.

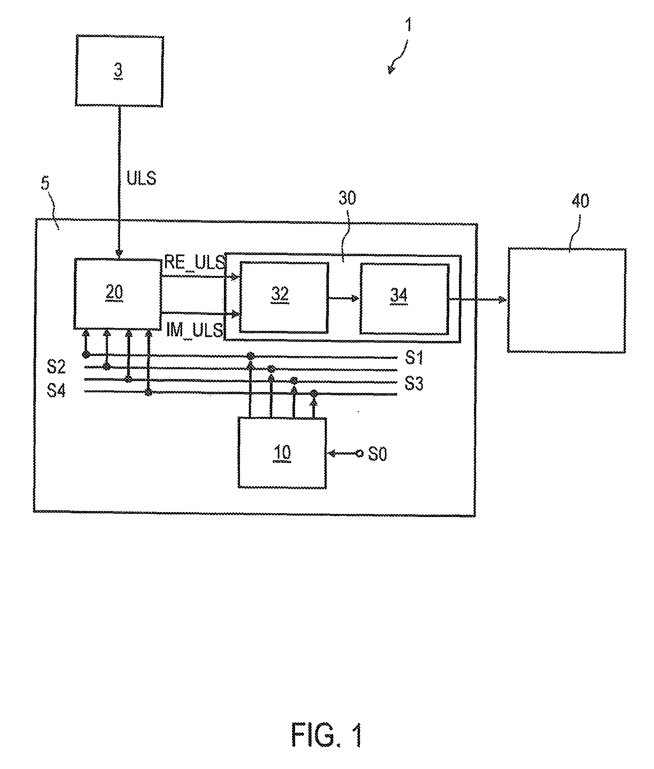

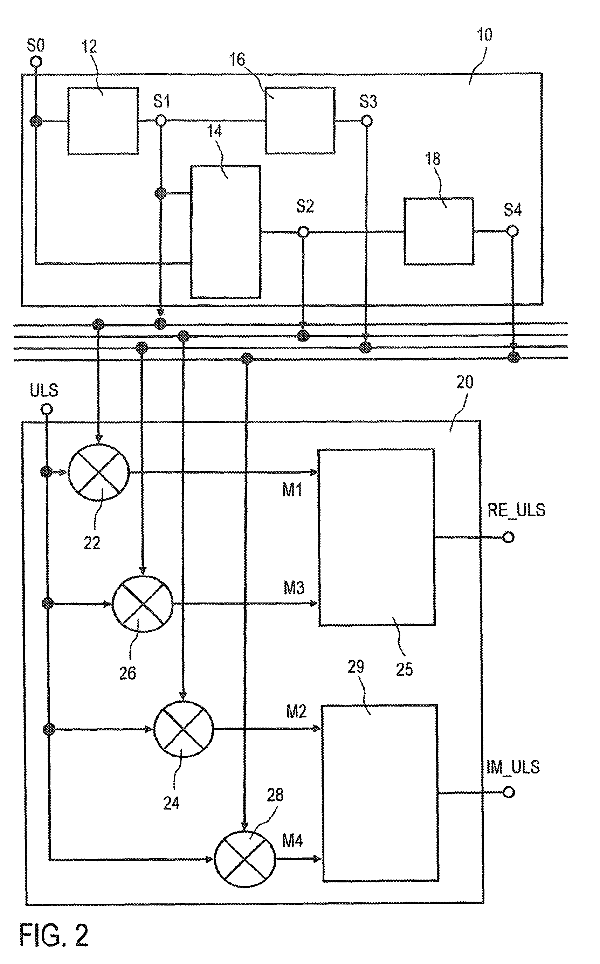

Wie aus Fig. 1 und 2 ersichtlich ist, umfasst ein Ausführungsbeispiel einer Vorrichtung 1 zur Umfelderfassung in einem Fahrzeug eine Sensoreinheit 3, welche mindestens einen Ultraschallsensor aufweist, eine Auswerte- und Steuereinheit 5 und eine Ausgabeeinheit 40, die optische, akustische und/oder haptische Ausgabemittel zur Darstellung und Ausgabe von erkannten Objekten im Überwachungsbereich umfasst. Die Sensoreinheit 3 sendet Ultraschallsignale in einen zu überwachenden Bereich aus und empfängt in Reaktion auf die ausgesendeten Ultraschallsignale Echosignale ULS, welche die Auswerte- und Steuereinheit 5 zur Erfassung von Objekten und/oder Objektbewegungen in dem zu überwachenden Bereich auswertet. Zur Auswertung unterwirft, die Auswerte- und Steuereinheit 5 die empfangenen Echosignale ULS einer Quadraturphasendetektion.

Erfindungsgemäß sind eine Referenzsignalerzeugungseinheit 10, welche zur Quadraturphasendetektion erforderliche Referenzsignale S1, S2, S3, S4 unter Verwendung von digitalen Logikverknüpfungen 12, 14, 16, 18 aus einem digitalen Basissignal S0 erzeugt, und ein Quadraturphasendetektor 20 vorhanden, welcher vier jeweils um 90° phasenverschobene Referenzsignale S1, S2, S3, S4 einzeln mit den empfangenen Echosignalen ULS mischt.

Wie aus Fig. 2 weiter ersichtlich ist, weist der Quadraturphasendetektor 20 im dargestellten Ausführungsbeispiel vier Mischer 22, 24, 26, 28 auf, um die empfangenen Echosignale ULS mit den vier Referenzsignalen S1, S2, S3, S4 zu mischen. Hierbei mischt ein erster Mischer 22 die empfangenen Echosignalen ULS mit einem ersten Referenzsignal S1 und erzeugt ein erstes Mischsignal M1. Ein zweiter Mischer 24 mischt die empfangenen Echosignalen ULS mit einem zweiten Referenzsignal S2 und erzeugt ein zweites Mischsignal M2. Ein dritter Mischer 26 mischt die empfangenen Echosignalen ULS mit einem dritten Referenzsignal S3 und erzeugt ein drittes Mischsignal M3. Ein vierter Mischer 28 mischt die empfangenen Echosignalen ULS mit einem vierten Referenzsignal S4 und erzeugt ein viertes Mischsignal M4.

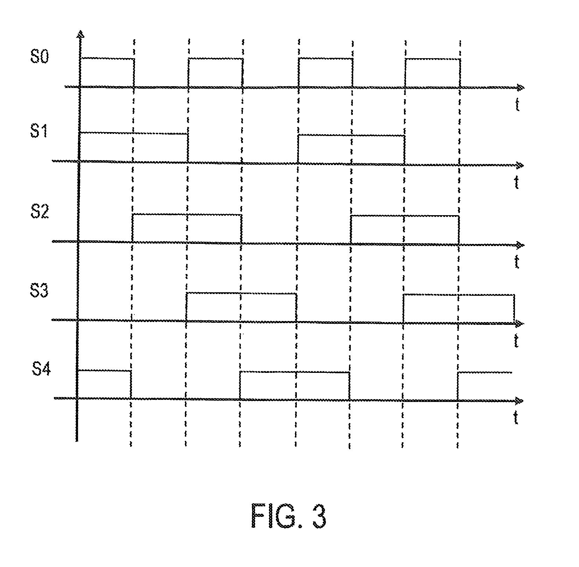

Wie aus Fig. 2 und 3 weiter ersichtlich ist, erzeugt die Referenzsignalerzeugungseinheit 10 das erste Referenzsignal S1 aus dem digitalen Basissignal S0, das beispielsweise eine Frequenz f0 von 80kHz aufweist, unter Verwendung eines T-Flip-Flops 12, welches eine Halbierung der Frequenz von 80kHz auf 40kHz bewirkt, so dass das erste Referenzsignal S1 eine Frequenz von 40kHz aufweist. Durch eine Exklusiv-ODER-Verknüpfung 14 des ersten Referenzsignals S1 mit dem digitalen Basissignal S0 erzeugt die Referenzsignalerzeugungseinheit 10 das zweite Referenzsignal S2 mit einer Frequenz von 40kHz und einer Phasenverschiebung von 90° zum ersten Referenzsignal S1. Durch eine Invertierung 16 des ersten Referenzsignals S1 erzeugt die Referenzsignalerzeugungseinheit 10 das dritte Referenzsignal S3 mit einer Frequenz von 40kHz sowie einer Phasenverschiebung von 90° zum zweiten Referenzsignal S2 und einer Phasenverschiebung von 180° zum ersten Referenzsignal S1. Durch eine Invertierung 18 des zweiten Referenzsignals S2 erzeugt die Referenzsignalerzeugungseinbeit 10 das vierte Referenzsignal S4 mit einer Frequenz von 40kHz sowie einer Phasenverschiebung von 90° zum dritten Referenzsignal S3, einer Phasenverschiebung von 180° zum zweiten Referenzsignal S2 und eine Phasenverschiebung von 270° zum ersten Referenzsignal S1.

Wie aus Fig. 2 weiter ersichtlich ist, addiert der Quadraturphasendetektor 20 jeweils zwei aus den Referenzsignalen S1, S2, S3, S4 und den empfangenen Echosignalen ULS erzeugte Mischsignale M1, M2, M3, M4, welche 180° phasenverschoben sind, um einen Imaginärteil IM_ULS und einen Realteil RE ULS der empfangenen Echosignale ULS zu ermitteln. Im dargestellten Ausführungsbeispiel ermittelt der Quadraturphasendetektor 20 den Realteil RE_ULS der empfangenen Echosignale ULS durch Addition des ersten Mischsignals M1, welches durch Mischen der empfangenen Echosignale ULS mit dem ersten Referenzsignal S1 erzeugbar ist, und des dritten Mischsignals M3, welches durch Mischen der empfangenen Echosignale ULS mit dem dritten Referenzsignal S3 erzeugbar ist, unter Verwendung eines ersten Addierers 25. Unter Verwendung eines zweiten Addierers 29 ermittelt der Quadraturphasendetektor 20 den Imaginärteil IM_ULS der empfangenen Echosignale ULS durch Addition des zweiten Mischsignals M2, welches durch Mischen der empfangenen Echosignale ULS mit dem zweiten Referenzsignal S2 erzeugbar ist, und des vierten Mischsignals M4, welches durch Mischen der empfangenen Echosignale ULS mit dem vierten Referenzsignal S4 erzeugbar ist.

Ausführungsformen der vorliegenden Erfindung verändern die Auswerteelektronik 5 für die Sensoreinheit 3 mit den Ultraschallsensoren so, dass eine weitergehende Signalauswertung stattfinden kann. Hierzu wird eine Quadraturphasendetektion mit vier Referenzsignalen S1, S2, S3, S4 vorgeschlagen. Zur einfachen Implementierung der benötigten Referenzsignale S1, S2, S3, S4 werden digitale Logikverknüpfungon 12, 14, 16, 18 vorgeschlagen, welche beispielsweise in einem ASIC recht einfach umgesetzt werden können. Für die optimale Datenanalyse ist es sinnvoll die oben beschriebene vierfache Mischung mit den vier Referenzsignalen S1=B₀*sin(ω₀*t), S2=B₀*sin(ω₀*t+π/2) , S3=B₀*sin(ω₀*t/π), S4=B₀*sin(ω₀*t+3*π/2) durchzuführen.

Durch das jeweilige Addieren zur Erzeugung des Realteils RE_ULS des empfangenen Echosignals ULS gemäß RE_ÜLS=1/2*(ULSⓧS₁+ULSⓧS₃) und des Imaginärteils IM_ULS des empfangenen Echosignals ULS gemäß IM_ULS=1/2*(ULSⓧS₂+ULSⓧS₄) , werden vorhandene Gleichspannungsanteile entfernt, wobei das Symbol ⓧ dafür steht, dass die beiden korrespondierenden Signale miteinander gemischt werden.

Durch den Realteil und den Imaginärteil des empfangenen Echosignals liegt die vollständige Information für eine nachfolgende komplette Analyse des empfangenen Echosignales im Frequenzbereich vor. Daher führt eine Recheneinheit 30 eine Fast-Fourier-Transformation 32 und eine anschließende Signalanlayse 34 durch. Die Fast-Fourier-Transformation erlaubt eine eindeutige Bestimmung der Dopplerfrequenz und ermöglicht eine eindeutige Trennung des eigentlichen empfangenen Echosignals ULS von unerwünschten Störungen der Umgebung.

Die beschriebene Vorrichtung 1 zur Umfelderfassung kann beispielsweise zur Erzeugung einer Einparkstrategie und/oder zur Abstandswarnung und/oder zur Durchführung eines automatischen Einparkvorgangs verwendet werden.

Ausführungsformen der vorliegenden Erfindung können als Schaltung, Vorrichtung, Verfahren, Datenverarbeitungsprogramm mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden. Zudem kann die vorliegende Erfindung als Computerprogrammprodukt auf einem computeroutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können.

Die computernutzbaren oder computerlesbaren Medien können beispielsweise elektronische, magnetische, optische, elektromagnetische Infrarot- oder Halbleitersysteme, Vorrichtungen, Geräte oder Verbreitungsmedien umfassen. Zudem können die computerlesbaren Medien eine elektrische Verbindung mit einer oder mehreren Leitungen eine tragbare Computerdiskette, einen Speicher mit direktem Zugriff (RAM), einen Nur-Lese-Speicher (ROM), einen löschbaren und programmierbaren Nur-Lese-Speicher (EPROM oder Flashspeicher, eine optischen Leitung und eine tragbare CD-ROM umfassen. Das computernutzbare oder das computerlesbare Medium kann sogar Papier oder ein anderes geeignetes Medium sein, auf welchem das Programm geschrieben ist, und von welchem es, beispielsweise durch einen optischen Abtastvorgang des Papiers oder des anderen Mediums elektrisch erfassbar ist, dann kompiliert, interpretiert oder falls erforderlich auf andere Weise verarbeitet und dann im Computerspeicher gespeichert werden kann.

## Patentansprüche

1. Verfahren zur Auswertung von Signalen einer Sensoreinheit mit mindestens einem Ultraschallsensor, wobei Ultraschallsignale in einen zu überwachenden Bereich ausgesendet und in Reaktion auf die ausgesendeten Ultraschallsignale Echosignale (ULS) empfangen und zur Erfassung von Objekten und/oder Objektbewegungen in dem zu überwachenden Bereich ausgewertet werden, wobei die empfangenen Echosignale (ULS) zur Auswertung einer Quadraturphasendetektion unterworfen werden,
**dadurch gekennzeichnet,**
**dass** zur Quadraturphasendetektion erforderliche Referenzsignale (S1, S2, S3, S4) unter Verwendung von digitalen Logikverknüpfungen (12, 14, 16, 18) aus einem digitalen Basissignal (S0) erzeugt werden, wobei vier jeweils um 90° phasenverschobene Referenzsignale (S1, S2, S3, S4) erzeugt und jeweils einzeln mit den empfangenen Echosignalen (ULS) gemischt werden.

2. Verfahren nach Anspruch 1,
**dadurch gekennzeichnet,**
**dass** ein erstes Referenzsignal (S1) durch eine Frequenzteilung (12) des digitalen Basissignals (S0) erzeugt wird.

3. Verfahren nach Anspruch 2,
**dadurch gekennzeichnet,**
**dass** ein zweites Referenzsignal (S2) durch eine Exklusiv-ODER-Verknüpfung (14) des ersten Referenzsignals (S1) mit dem digitalen Basissignal (S0) erzeugt wird.

4. Verfahren nach Anspruch 2 oder 3,
**dadurch gekennzeichnet,**
**dass** ein drittes Referenzsignal (S3) durch eine Invertierung (16) des ersten Referenzsignals (S1) erzeugt wird.

5. Verfahren nach Anspruch 3 oder 4,
**dadurch gekennzeichnet,**
**dass** ein viertes Referenzsignal (S4) durch eine Invertierung (18) des zweiten Referenzsignals (S2) erzeugt wird.

6. Verfahren nach einem der Ansprüche 1 bis 5,
**dadurch gekennzeichnet,**
**dass** jeweils zwei aus den Referenzsignalen (S1, S2, S3, S4) und den empfangenen Echosignalen (ULS) erzeugte Mischsignale (M1, M2, M3, M4), welche 180° phasenverschoben sind, addiert werden, um einen Imaginärteil (IM_ULS) und einen Realteil (RE_ULS) der empfangenen Echosignale (ULS) zu ermitteln.

7. Verfahren nach Anspruch 6,
**dadurch gekennzeichnet,**
**dass** der Realteil (RE_ULS) der empfangenen Echosignale (ULS) durch Addition eines ersten Mischsignals (M1), welches durch Mischen der empfangenen Echosignale (ULS) mit dem ersten Referenzsignal (S1) erzeugt wird, und eines dritten Mischsignals (M3) ermittelt wird, welches durch Mischen der empfangenen Echosignale (ULS) mit dem dritten Referenzsignal (S3) erzeugt wird.

8. Verfahren nach Anspruch 6 oder 7,
**dadurch gekennzeichnet,**
**dass** der Imaginärteil (IM_ULS) der empfangenen Echosignale (ULS) durch Addition eines zweiten Mischsignals (M2), welches durch Mischen der empfangenen Echosignale (ULS) mit dem zweiten Referenzsignal (S2) erzeugt wird, und eines vierten Mischsignals (M4) ermittelt wird, welches durch Mischen der empfangenen Echosignale (ULS) mit dem vierten Referenzsignal (S4) erzeugt wird.

9. Verfahren nach einem der vorgehenden Ansprüche 6 bis 8,
**dadurch gekennzeichnet,**
**dass** der Realteil (RE_ULS) und der Imaginärteil (IM_ULS) der empfangenen Echosignale (ULS) zur weiteren Auswertung einer Fast-Fourier-Transformation (32) unterzogen werden.

10. Vorrichtung zur Umfelderfassung in einem Fahrzeug, insbesondere zur Durchführung des Verfahrens nach einem der vorhergehenden Ansprüche 1 bis 9, mit einer Sensoreinheit (3), welche mindestens einen Ultraschallsensor aufweist, und einer Auswerte- und Steuereinheit (5), wobei die Sensoreinheit (3) Ultraschallsignale in einen zu überwachenden Bereich aussendet und in Reaktion auf die ausgesendeten Ultraschallsignale Echosignale (ULS) empfängt, welche die Auswerte- und Steuereinheit (5) zur Erfassung von Objekten und/oder Objektbewegungen in dem zu überwachenden Bereich auswertet, wobei die Auswerte- und Steuereinheit (5) die empfangenen Echosignale (ULS) zur Auswertung einer Quadraturphasendetektion unterwirft,
**gekennzeichnet durch**,
eine Referenzsignalerzeugungseinheit (10), welche zur Quadraturphasendetektion erforderliche Referenzsignale (S1, S2, S3, S4) unter Verwendung von digitalen Logikverknüpfungen (12, 14, 16, 18) aus einem digitalen Basissignal (S0) erzeugt, wobei vier jeweils um 90° phasenverschobene Referenz- signale (S1, S2, S3, S4) erzeugt werden und einen Quadraturphasendetektor (20),
welcher die vier Referenzsignale einzeln mit den empfangenen Echosignalen (ULS) mischt.

11. Vorrichtung nach Anspruch 10,
**dadurch gekennzeichnet,**
**dass** die Referenzsignalerzeugungseinheit (10) ein erstes Referenzsignal (S1) aus einem digitalen Basissignal (S0) unter Verwendung eines T-Flip-Flops (12) und/oder ein zweites Referenzsignal (S2) durch eine Exklusiv-ODER-Verknüpfung (14) des ersten Referenzsignals (S1) mit dem digitalen Basissignal (S0) und/oder ein drittes Referenzsignal (S3) durch eine Invertierung (16) des ersten Referenzsignals (S1) und/oder ein viertes Referenzsignal (S4) durch eine Invertierung (18) des zweiten Referenzsignals (S2) erzeugt.

12. Vorrichtung nach Anspruch 10 oder 11,
**dadurch gekennzeichnet,**
**dass** der Quadraturphasendetektor (20) jeweils zwei aus den Referenzsignalen (S1, S2, S3, S4) und den empfangenen Echosignalen (ULS) erzeugte Mischsignale (M1, M2, M3, M4) addiert, welche 180° phasenverschoben sind, um einen Imaginärteil (IM_ULS) und einen Realteil (RE_ULS) der empfangenen Echosignale (ULS) zu ermitteln.

13. Vorrichtung nach Anspruch 12,
**dadurch gekennzeichnet,**
**dass** der Quadraturphasendetektor (20) den Realteil (RE_ULS) der empfangenen Echosignale (ULS) durch Addition eines ersten Mischsignals (M1), welches durch Mischen der empfangenen Echosignale (ULS) mit dem ersten Referenzsignal (S1) erzeugbar ist, und eines dritten Mischsignals (M3) ermittelt, welches durch Mischen der empfangenen Echosignale (ULS) mit dem dritten Referenzsignal (S3) erzeugbar ist, und/oder den Imaginärteil (IM_ULS) der empfangenen Echosignale (ULS) durch Addition eines zweiten Mischsignals (M2), welches durch Mischen der empfangenen Echosignale (ULS) mit dem zweiten Referenzsignal (S2) erzeugbar ist, und eines vierten Mischsignals (M4) ermittelt, welches durch Mischen der empfangenen Echosignale (ULS) mit dem vierten Referenzsignal (S4) erzeugbar ist.

14. Computerprogrammprodukt mit Programmcodemitteln, welche in einem computerlesbaren Medium gespeichert sind, um das Verfahren nach einem der Ansprüche 1 bis 9 durchzuführen, wenn das Computerprogrammprodukt auf einer Auswerte- und Steuereinheit (5) mit einer Recheneinheit (30) abgearbeitet wird.

## Claims

1. Method for evaluating signals from a sensor unit having at least one ultrasonic sensor, ultrasonic signals being emitted into a region, to be monitored and echo signals (ULS) being received in response to the emitted ultrasonic signals and being evaluated in order to detect objects and/or object movements in the region to be monitored, the received echo signals (ULS) being subjected to quadrature phase detection for the purpose of evaluation,
**characterized**
**in that** reference signals (S1, S2, S3, S4) required for the quadrature phase detection are generated from a digital base signal (S0) using digital logic combinations (12, 14, 16, 18), four reference signals (S1, S2, S3, S4) which are each phase-shifted by 90° being generated and each being individually mixed with the received echo signals (ULS).

2. Method according to Claim 1,
**characterized**
**in that** a first reference signal (S1) is generated by dividing the frequency (12) of the digital base signal (S0).

3. Method according to Claim 2,
**characterised**
**in that** a second reference signal (S2) is generated by means of an exclusive OR combination (14) of the first reference signal (S1) with the digital base signal (S0).

4. Method according to Claim 2 or 3,
characterizes
in that a third reference signal (S3) is generated by inverting (16) the first reference signal (S1).

5. Method according to Claim 3 or 4,
**characterized**
**in that** a fourth reference signal (S4) is generated by inverting (18) the second reference signal (S2).

6. Method according to one of Claims 1 to 5,
**characterized**
**in that** two mixed signals (M1, M2, M3, M4) which are generated from the reference signals (S1, S2, S3, S4) and the received echo signals (ULS) and are phase-shifted by 180° are respectively added in order to determine an imaginary part (IM_ULS) and a real part (RE_ULS) of the received echo signals (ULS).

7. Method according to Claim 6,
**characterized**
**in that** the real part (RE_ULS) of the received echo signals (ULS) is determined by adding a first mixed signal (M1), which is generated by mixing the received echo signals (ULS) with the first reference signal (S1), and a third mixed signal (M3) which is generated by mixing the received echo signals (ULS) with the third reference signal (S3).

8. Method according to Claim 6 or 7,
**characterized**
**in that** the imaginary part (IM_ULS) of the received echo signals (ULS) is determined by adding a second mixed signal (M2), which is generated by mixing the received echo signals (ULS) with the second reference signal (S2), and a fourth mixed signal (M4) which is generated by mixing the received echo signals (ULS) with the fourth reference signals (S4).

9. Method according to one of the preceding Claims 6 to 8,
**characterized**
**in that** the real part (RE_ULS) and the imaginary part (IM_ULS) of the received echo signals (UPS) are subjected to a fast Fourier transformation (32) for the purpose of further evaluation.

10. Apparatus for detecting the environment in a vehicle, in particular for carrying out the method according to one of the preceding Claims 1 to 9, having a sensor unit (3), which has at least one ultrasonic sensor, and an evaluation and control unit (5), the sensor unit (3) emitting ultrasonic signals into a region to be monitored and receiving echo signals (ULS) in response to the emitted ultrasonic signals, which echo signals are evaluated by the evaluation and control unit (5) in order to detect objects and/or object movements in the region to be monitored, the evaluation and control unit (5) subjecting the received echo signals (ULS) to quadrature phase detection for the purpose of evaluation,
**characterized by**
a reference signal generating unit (10) which generates reference signals (S1, S2, S3, S4) required for the quadrature phase detection from a digital base signal (S0) using digital logic combinations (12, 14, 16, 18), four reference signals (S1, S2, S3, S4) which are each phase-shifted by 90° being produced, and a quadrature phase detector (20) which individually mixes the four reference signals with the received echo signals (ULS).

11. Apparatus according to Claim 10,
**characterized**
**in that** the reference signal generating unit (10) generates a first reference signal (S1) from a digital base signal (S0) using a T flip-flop (12) and/or generates a second reference signal (S2) the means of an exclusive OR combination (14) of the first reference signal (S1) with the digital base signal (S0) and/or generates a third reference signal (S3) by inverting (16) the first reference signal (S1) and/or generates a fourth reference signal (S4) by inverting (18) the second reference signal (S2).

12. Apparatus according to Claim 10 or 11,
**characterized**
**in that** the quadrature phase detector (20) respectively adds two mixed signals (M1, M2, M3, M4) which are generated from the reference signals (S1, S2, S3, S4) and the received echo signals (ULS) and are phase-shifted by 180° in order to determine an imaginary part (IM_ULS) and a real part (RE_ULS) of the received echo signals (ULS).

13. Apparatus according to Claim 12,
**characterized**
**in that** the quadrature phase detector (20) determines the real part (RE_ULS) of the received echo signals (ULS) by adding a first mixed signal (M1), which can be generated by mixing the received echo signals (ULS) with the first reference signal (S1), and a third mixed signal (M3) which can be generated by mixing the received echo signals (ULS) with the third reference signal (S3), and/or determines the imaginary part (IM_ULS) of the received echo signals (ULS) by adding a second mixed signal (M2), which can be generated by mixing the received echo signals (ULS) with the second reference signal (S2), and a fourth mixed signal (M4) which can be generated by mixing the received echo signals (ULS) with the fourth reference signal (S4).

14. Computer program product having program code means which are stored in a computer-readable medium in order to carry out the method according to one of Claims 1 to 9 if the computer program product is executed on an evaluation and control unit (5) having a computation, unit (30).

## Revendications

1. Procédé d'interprétation de signaux d'une unité de détection comprenant au moins un capteur à ultrasons, des signaux ultrasoniques étant émis dans une zone à surveiller et des signaux d'écho (ULS) étant reçus en réaction aux signaux ultrasoniques émis et interprétés pour la détection d'objets et/ou de mouvements d'objets dans la zone à surveiller, les signaux d'écho (ULS) reçus étant soumis à une détection de phase en quadrature pour leur interprétation,
**caractérisé en ce**
**que** des signaux de référence (S1, S2, S3, S4) nécessaires pour la détection de phase en quadrature sont générés à partir d'un signal de base (S0) numérique en utilisant des combinaisons logiques numériques (12, 14, 16, 18), quatre signaux de référence (S1, S2, S3, S4) respectivement déphasés de 90° étant générés et étant respectivement mélangés individuellement avec les signaux d'écho (ULS) reçus.

2. Procédé selon la revendication 1, **caractérisé en ce qu'**un premier signal de référence (S1) est généré par une division en fréquence (12) du signal de base (S0) numérique.

3. Procédé selon la revendication 2, **caractérisé en ce qu'**un deuxième signal de référence (S2) est généré par une combinaison OU exclusif (14) du premier signal de référence (S1) avec le signal de base (S0) numérique.

4. Procédé selon la revendication 2 ou 3, **caractérisé en ce qu'**un troisième signal de référence (S3) est généré par une inversion (16) du premier signal de référence (S1).

5. Procédé selon la revendication 3 ou 4, **caractérisé en ce qu'**un quatrième signal de référence (S4) est généré par une inversion (18) du deuxième signal de référence (S2).

6. Procédé selon l'une des revendications 1 à 5, **caractérisé en ce que** deux signaux mélangés (M1, M2, M3, M4), lesquels sont déphasés de 180° et sont générés à partir des signaux de référence (S1, S2, S3, S4) et des signaux d'écho reçus (ULS), sont à chaque fois additionnés pour déterminer une partie imaginaire (IM_ULS) et une partie réelle (RE_ULS) des signaux d'écho (ULS) reçus.

7. Procédé selon la revendication 6, **caractérisé en ce que** la partie réelle (RE_US) des signaux d'écho (ULS) reçus est déterminée en additionnant un premier signal mélangé (M1), lequel est généré en mélangeant les signaux d'écho (ULS) reçus avec le premier signal de référence (S1), et un troisième signal mélangé (M3), lequel est généré en mélangeant les signaux d'écho (ULS) reçus avec le troisième signal de référence (S3).

8. Procédé selon la revendication 6 ou 7, **caractérisé en ce que** la partie imaginaire (IM_ULS) des signaux d'écho (ULS) reçus est déterminée en additionnant un deuxième signal mélangé (M2), lequel est généré en mélangeant les signaux d'écho (ULS) reçus avec le deuxième signal de référence (S2), et un quatrième signal mélangé (M4), lequel est généré en mélangeant les signaux d'écho (ULS) reçus avec le quatrième signal de référence (S4).

9. Procédé selon l'une des revendications précédentes 6 à 8, **caractérisé en ce que** la partie réelle (RE_ULS) et la partie imaginaire (IM_ULS) des signaux d'écho (ULS) reçus sont soumises à une transformation de Fourier rapide (32) en vue d'une interprétation supplémentaire.

10. Dispositif de détection de l'environnement dans un véhicule, notamment pour mettre en oeuvre une procédé selon l'une des revendications précédentes 1 à 9, comprenant une unité de détection (3), laquelle comprend au moins un capteur à ultrasons, et une unité d'interprétation et de commande (5), l'unité de détection (3) émettant des signaux ultrasoniques dans une zone à surveiller et recevant des signaux d'écho (ULS) en réaction aux signaux ultrasoniques émis, lesquels sont interprétés par l'unité d'interprétation et de commande (5) pour la détection d'objets et/ou de mouvements d'objets dans la zone à surveiller, l'unité d'interprétation et de commande (5) soumettant les signaux d'écho (ULS) reçus à une détection de phase en quadrature pour leur interprétation,
**caractérisé par**
une unité de génération de signaux de référence (10) qui génère des signaux de référence (S1, S2, S3, S4) nécessaires pour la détection de phase en quadrature à partir d'un signal de base (S0) numérique en utilisant des combinaisons logiques numériques (12, 14, 16, 18), quatre signaux de référence (S1, S2, S3, S4) respectivement déphasés de 90° étant générés, et un détecteur de phase en quadrature (20) qui mélange individuellement les quatre signaux de référence avec les signaux d'écho (ULS) reçus.

11. Dispositif selon la revendication 10, **caractérisé en ce que** l'unité de génération de signaux de référence (10) génère un premier signal de référence (S1) à partir du signal de base (S0) numérique en utilisant une bascule T (12) et/ou un deuxième signal de référence (S2) par une combinaison OU exclusif (14) du premier signal de référence (S1) avec le signal de base (S0) numérique et/ou un troisième signal de référence (S3) par une inversion (16) du premier signal de référence (S1) et/ou un quatrième signal de référence (S4) par une inversion (18) du deuxième signal de référence (S2).

12. Dispositif selon la revendication 10 ou 11, **caractérisé en ce que** le détecteur de phase en quadrature (20) additionne respectivement deux signaux mélangés (M1, M2, M3, M4), lesquels sont générés à partir des signaux de référence (S1, S2, S3, S4) et des signaux d'écho reçus (ULS) et sont déphasés de 180°, pour déterminer une partie imaginaire (IM_ULS) et une partie réelle (RE_ULS) des signaux d'écho (ULS) reçus.

13. Dispositif selon la revendication 12, **caractérisé en ce que** le détecteur de phase en quadrature (20) détermine la partie réelle (RE_ULS) des signaux d'écho (ULS) reçus en additionnant un premier signal mélangé (M1), lequel peut être généré en mélangeant les signaux d'écho (ULS) reçus avec le premier signal de référence (S1), et un troisième signal mélangé (M3), lequel peut être généré en mélangeant les signaux d'écho (ULS) reçus avec le troisième signal de référence (S3) et/ou détermine la partie imaginaire (IM_ULS) des signaux d'écho (ULS) reçus en additionnant un deuxième signal mélangé (M2), lequel peut être généré en mélangeant les signaux d'écho (ULS) reçus avec le deuxième signal de référence (S2), et un quatrième signal mélangé (M4), lequel peut être généré en mélangeant les signaux d'écho (ULS) reçus avec le quatrième signal de référence (S4).

14. Produit de programme informatique comprenant des moyens de code de programme qui sont enregistrés dans un support lisible par ordinateur pour mettre en oeuvre le procédé selon l'une des revendications 1 à 9 lorsque le produit de programme informatique est exécuté sur une unité d'interprétation et de commande (5) comprenant une unité de calcul (30).
